# EUROPÄISCHE PATENTSCHRIFT

(11) **EP 1 317 318 B1**
(45) Veröffentlichungstag und Bekanntmachung des Hinweises auf die Patenterteilung: **02.11.2005**
(21) Anmeldenummer: 01980269.3
(22) Anmeldetag: 24.08.2001
(51) Int. Cl.: B01D 63/02, B01D 63/04, B01D 65/08, B01D 65/02

(54) **MEMBRANFILTER FÜR DIE WASSERAUFBEREITUNG**
MEMBRANE FILTER FOR WATER TREATMENT
FILTRE A MEMBRANE POUR TRAITEMENT DE L'EAU

(30) Priorität: 13.09.2000 DE 10045227
(43) Veröffentlichungstag der Anmeldung: 11.06.2003
(73) Patentinhaber: Koch Membrane Systems GmbH, 52070 Aachen (DE)
(72) Erfinder: Vossenkaul, Klaus, 52074 Aachen (DE); Schäfer, Stefan, 52074 Aachen (DE)
(74) Vertreter: Albrecht, Rainer Harald
(86) Internationale Anmeldenummer: PCT/EP2001/009788
(87) Internationale Veröffentlichungsnummer: WO 2002/022244

(56) Entgegenhaltungen:
- EP-A- 0 855 214
- EP-A- 0 947 237
- WO-A-98/28066
- PATENT ABSTRACTS OF JAPAN vol. 1995, no. 10, 30. November 1995 (1995-11-30) -& JP 07 185268 A (TORAY IND INC), 25. Juli 1995 (1995-07-25) -& DATABASE WPI Section Ch, Week 199538 Derwent Publications Ltd., London, GB; Class J01, AN 1995-288175 XP002188558 & JP 07 185268 A (TORAY IND INC), 25. Juli 1995 (1995-07-25)
- PATENT ABSTRACTS OF JAPAN vol. 018, no. 075 (C-1163), 8. Februar 1994 (1994-02-08) -& JP 05 285349 A (NITTO DENKO CORP), 2. November 1993 (1993-11-02) -& DATABASE WPI Section Ch, Week 199348 Derwent Publications Ltd., London, GB; Class B07, AN 1993-382336 XP002188559 & JP 05 285349 A (NITTO DENKO CORP), 2. November 1993 (1993-11-02)
- PATENT ABSTRACTS OF JAPAN vol. 1998, no. 12, 31. Oktober 1998 (1998-10-31) & JP 10 180048 A (KURITA WATER IND LTD), 7. Juli 1998 (1998-07-07) -& DATABASE WPI Section Ch, Week 199837 Derwent Publications Ltd., London, GB; Class D15, AN 1998-431712 XP002188560 & JP 10 180048 A (KURITA WATER IND LTD), 7. Juli 1998 (1998-07-07)

## Beschreibung

Die Erfindung betrifft einen Membranfilter für die Wasseraufbereitung mit
einem Kopfstück, das einen Permeatsammelraum mit einem Permeatablauf aufweist,
mindestens einem Faserbündel aus Kapillarmembranen, die mit einem offenen Ende zum Permeatsammelraum in das Kopfstück eingegossen und an ihrem anderen Ende geschlossen sind, und
einer Begasungseinrichtung mit einem Mundstück, das mindestens eine Austrittsöffnung für Luft aufweist und sich im Wesentlichen parallel zu den Kapillarmembranen erstreckt,
wobei die von dem aufzubereitenden Rohwasser umgebenen Kapillarmembranen des Faserbündels an einer Anschlussfläche des Kopfstückes befestigt sind und geklärte Flüssigkeit in den Kapillarmembranen zum Permeatsammelraum abziehbar ist und wobei das Kopfstück einen Luftkanal enthält, an den des Mundstück der Begasungseinrichtung angeschlossen ist. Die Kapillarmembranen besitzen einen Durchmesser von weniger als 5 mm und weisen vorzugsweise eine Durchlässigkeit von Mikrofiltrationsmembranen oder Ultrafiltrationsmembranen auf. Die Verwendung von Kapillarmembranen für die Umkehrosmose oder Nanofiltration soll jedoch nicht ausgeschlossen sein. Bevorzugt sind Kapillarmembranen in einem Durchmesserbereich zwischen 0,5 und 3 mm. Die Triebkraft für die Membranfiltration ist eine Druckdifferenz, die rohwasserseitig durch einen Überdruck und/oder durch eine permeatseitige Druckerniedrigung realisiert werden kann. Eine permeatseitige Druckerniedrigung bietet sich insbesondere an, wenn das Membranfilter im Tauchbetrieb eingesetzt werden soll und in ein das Rohwasser enthaltendes Becken, z.B. das Belebungsbecken einer Kläranlage, eingehängt wird.

Ein Membranfiter mit der im Oberbegriff des Anspruchs 1 beschriebenen Merkmalen ist aus JP-A-07185268 bekannt.

Bei einem aus WO-A-9828066 bekannten Membranfilter sind Kapillarmembranen des im Tauchbetrieb einsetzbaren Membranfilters zwischen zwei Kopfstücken endseitig eingespannt. An das eine, im Betrieb untere Kopfstück ist eine Begasungseinrichtung angeschlossen. Das andere, obere Kopfstück enthält den Permeatsammelraum. Es bildet einen Verdrängungskörper, durch dessen Wirkung die aufsteigenden Luftblasen zur Außenseite des Membranfaserbündels abgedrängt werden. Eine wirkungsvolle Begasung ist im oberen Bereich des Faserbündels nicht mehr gewährleistet. Hier sind auch keine oder nur geringe Membranbewegungen möglich. Es kommt infolgedessen zur Bildung von Membrandeckschichten und groben Schmutzablagerungen im oberen Bereich des Faserbündels.

Bei einem aus DE 198 11 945 A1 bekannten Membranfilter ist das Faserbündel aus Kapillarmembranen in ein druckfestes Mantelrohr eingesetzt, das in Längsrichtung der Kapillarmembranen durchströmt wird. Die Kapillarmembranen sind einseitig in einen Anströmboden eingegossen, der eine Vielzahl gleichmäßig über den Querschnitt verteilter Bohrungen für den Durchfluss des Rohwassers aufweist. Um zu verhindern, dass sich an der Außenseite der Kapillarmembranen Deckschichten bilden und sich die Mikroporen der Kapillarmembranen zusetzen, ist eine gleichmäßige Durchströmung des Membranfilterraumes mit definierter Strömungsgeschwindigkeit erforderlich. Zur Verbesserung des Stoffaustausches kann das Rohwasser vor Eintritt in den Membranfilterraum mit Luft begast werden. Eine ausreichende Luftverteilung ist innerhalb des Faserbündels nicht gewährleistet. Die Luft wird mit der Rohwasserströmung im Wesentlichen außen am Membranbündel entlang geführt und leistet keinen wirksamen Beitrag zur Membranreinigung.

Der Erfindung liegt die Aufgabe zugrunde, einen Membranfilter für die Wasseraufbereitung anzugeben, bei dem eine wirksame Begasung über die gesamte Länge des Faserbündels gewährleistet ist und ein effektiver Abtransport von Membranbelägen, die sich von den Membranoberflächen ablösen, sichergestellt ist.

Ausgehend von einem Membranfilter des eingangs beschriebenen Aufbaus wird die Aufgabe erfindungsgemäß durch die im kennzeichnenden Teil des Anspruchs 1 beschriebenen Merkmale gelöst. Die aus dem Mundstück austretende Luft durchströmt das Faserbündel von innen nach außen und strömt teilweise in Längsrichtung der Kapillarmembranen ab. Die Luftzufuhr erfolgt vorzugsweise intermittierend mit dem Ziel, Deckschichten, die sich während der Membranfiltration an der Membranoberfläche gebildet haben, abzureinigen. Die erfindungsgemäße Lufteinleitung in das Faserbündel ermöglicht eine überraschend wirksame Reinigung unabhängig von der Strömungsgeschwindigkeit des Rohwassers. Insofern kann das erfindungsgemäße Membranfilter auch im Tauchbetrieb eingesetzt werden.

Das Mundstück besitzt z.B. einen rohrförmigen Abschnitt mit umfangsseitigen Bohrungen oder ist als Ringspaltdüse ausgebildet, aus der die Luft radial oder zumindest mit einer radialen Bewegungskomponente austritt. Durch die Bemessung der Länge des Mundstückes und durch die Anordnung der Austrittsbohrungen bzw. Austrittsdüsen kann die Luft gezielt in das Faserbündel eingeleitet werden. Als vorteilhaft erweist es sich auch, wenn das Mundstück ein Rückschlagventil aufweist, das bei abfallendem Druck der Luftzuführung schließt.

Das Faserbündel ist in dichter Packung an einer Anschlussfläche des Kopfstückes befestigt, die bei einem Tauchbetrieb des Membranfilters nicht von Strömungskanälen für das Rohwasser durchsetzt ist. Die an ihrem freien Ende geschlossenen Kapillarmembranen bewegen sich, da sie nur an einem Ende eingespannt sind, in dem zu filtrierenden Rohwasser. Zur Begrenzung der seitlichen Bewegungen des Faserbündels kann auf das Kopfstück ein Korb aufgesetzt werden. Der Korb kann aus Stäben gefertigt sein oder beispielsweise auch aus einem mit umfangsseitigen Öffnungen versehenen Rohr bestehen. Das Kopfstück kann ferner Anschlusseinrichtungen zur Befestigung an einem Gestell aufweisen, das in ein das Rohwasser enthaltendes Becken absenkbar ist. Im Rahmen der Erfindung liegt es, das Kopfstück quaderförmig auszubilden, wobei der Permeatablauf an einer schmalen Seitenfläche oder am Boden erfolgt. Mehrere dieser Einheiten können nach Art eines Filterpaketes nebeneinander angeordnet werden, wobei die Permeatabläufe zweckmäßig durch eine Sammelleitung verbunden sind.

Sofern das Membranfilter im Tauchbetrieb eingesetzt wird, sind keine Einrichtungen für eine Anströmung der Kapillarmembranen mit Rohwasser erforderlich. Im Rahmen der Erfindung liegt es auch, das Membranfilter mit einem flüssigkeitsdurchströmten Filterraum auszubilden. Die Durchströmung des Filterraumes erfolgt zweckmäßig in Längsrichtung der Kapillarmembranen, wobei das Rohwasser durch Bohrungen im Kopfstück, die erfindungsgemäß konzentrisch um die Begasungseinrichtung angeordnet sind, in den Filterraum eintritt. Die Kapillarmembranen sind an einer ringförmigen Anschlussfläche zwischen der Begasungseinrichtung und den flüssigkeitsführenden Bohrungen in das Kopfstück eingegossen. Gemäß einer weiteren, besonders vorteilhaften Ausbildung ist die Anschlussfläche des Kopfstückes, in der die das Faserbündel bildenden Kapillarmembranen endseitig eingegossen sind, sternförmig ausbildet, wobei die Anschlussfläche die ringförmige Fläche zwischen der Begasungseinrichtung und den konzentrisch angeordneten Bohrungen ausfüllt und sich bis in die Bereiche zwischen den Flüssigkeitskanälen hinein erstreckt. Erfindungsgemäß ist ein Faserbündel vorgesehen, welches die Kapillarmembranen in einer sehr dichten Packung enthält, wobei das Rohwasser außenseitig an dem Faserbündel vorbeigeführt wird und Luft innerhalb des Faserbündels eingeleitet wird. Bei allen Ausführungen ist das Faserbündel vertikal im Rohwasser angeordnet, wobei die Kapillarmembranen an ihrem unteren Ende am Kopfstück fixiert sind und sich ihr oberes Ende im Flüssigkeitsstrom bewegen kann. Die Luftblasen steigen im Wesentlichen im Inneren des Faserbündels nach oben und werden von der außenseitig an dem Faserbündel vorbeiströmenden Flüssigkeit nicht oder nur wenig mitgerissen.

Bei einer Ausführung des erfindungsgemäßen Membranfilters mit einem durchströmten Filterraum ist das Kopfstück zweckmäßig mit einem rohrförmigen Mantel lösbar verbunden, welcher den Filterraum bildet. In weiterer Ausgestaltung ist erfindungsgemäß vorgesehen, dass das Kopfstück an der vom Faserbündel abgewandten Stirnseite mit dem rohrförmigen Mantel eines weiteren identisch ausgebildeten Membranfilters verbindbar ist, und dass der Permeatablauf am Umfang des Kopfstückes angeordnet ist. Bei der beschriebenen Ausführung können mehrere Membranfilter als modulare Einheiten hintereinander in Reihe geschaltet werden. Dadurch ist die Filterfläche variabel an den Anwendungsfall anpassbar. Die Permeatabläufe am Umfang der Kopfstücke können durch ein Sammelrohr miteinander verbunden werden.

Gemäß einer weiteren erfindungsgemäßen Ausgestaltung sind an das Kopfstück mehrere Faserbündel angeschlossen, wobei jedem Faserbündel eine Begasungseinrichtung sowie die Begasungseinrichtung konzentrisch umgebende flüssigkeitsdurchströmte Bohrungen zugeordnet sind. Das Kopfstück weist getrennte Verteilerkammern für Wasser und Luft auf, in welche Bohrungen für Wasser bzw. Luftkanäle einmünden. An das Kopfstück sind Kammern angeschlossen, die jeweils ein Faserbündel aus Kapillarmembranen enthalten und in Längsrichtung der Kapillarmembranen von dem Rohwasser durchströmt sind. Die Ausgestaltung ermöglicht eine Parallelschaltung von Faserbündeln in einer sehr kompakten Anordnung.

Im Folgenden wird die Erfindung anhand einer lediglich ein Ausführungsbeispiel darstellenden Zeichnung ausführlicher erläutert. Es zeigen in schematischer Darstellung
- Fig. 1 und 2: erfindungsgemäße Membranfilter für die Wasseraufbereitung, die im Tauchbetrieb einsetzbar sind, jeweils in einem Längsschnitt,
- Fig. 3 bis 5: ein erfindungsgemäßes Membranfilter mit einem flüssigkeitsdurchströmten Filterraum,
- Fig. 6 und 7: weitere Ausgestaltungen des erfindungsgemäßen Membranfilters.

Zum grundsätzlichen Aufbau der in den Figuren dargestellten erfindungsgemäßen Membranfilter gehören ein Kopfstück 1, das einen Permeatsammelraum 2 mit einem Permeatablauf 3 aufweist, und mindestens ein Faserbündel 4 aus Kapillarmembranen 5, die an einem Ende verschlossen sind und an ihrer anderen Seite mit einem offenen Ende zum Permeatsammelraum 2 in das Kopfstück 1 eingegossen sind. Bei den Kapillarmembranen 5 handelt es sich vorzugsweise um Ultrafiltrationsmembranen oder Mikrofiltrationsmembranen, deren Durchmesser weniger als 5 mm beträgt. Vorzugsweise besitzen die Kapillarmembranen einen Durchmesser zwischen 0,5 und 3 mm. Die Kapillarmembranen 5 sind von dem aufzubereitenden Rohwasser 6 umgeben. Die Filtration erfolgt aufgrund einer transmembranen Druckdifferenz, die durch einen rohwasserseitigen Überdruck und/oder einen permeatseitigen Unterdruck erzeugt werden kann. Die geklärte Flüssigkeit strömt in den Kapillarmembranen 5 zum Permeatsammelraum 2 ab.

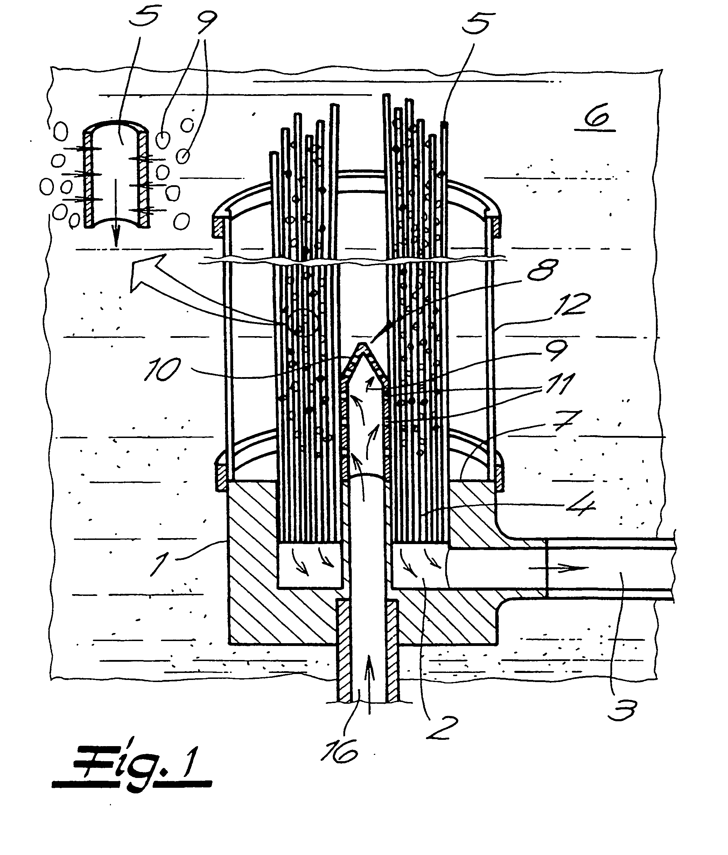

Die Kapillarmembranen 5 des Faserbündels 4 sind in dichter Packung an einer Anschlussfläche 7 des Kopfstückes befestigt, die nicht von Strömungskanälen für das Rohwasser durchsetzt ist. Innerhalb des Faserbündels 4 ist eine Begasungseinrichtung 8 angeordnet, aus der Luft austritt. Die Luftzufuhr erfolgt vorzugsweise intermittierend mit dem Ziel, Deckschichten, die sich während der Membranfiltration an der Membranoberfläche gebildet haben, abzureinigen. Bei der in Fig. 1 dargestellten Ausführung weist die Begasungseinrichtung 8 ein vorstehendes, mit mindestens einer Luftaustrittsöffnung versehenes Mundstück 10 auf, das sich innerhalb des Faserbündels 4 im Wesentlichen parallel zu den Kapillarmembranen 5 erstreckt und an einen im Kopfstück 1 angeordneten Luftkanal 16 angeschlossen ist. Das Mundstück 10 weist einen rohrförmigen Abschnitt mit umfangsseitigen Bohrungen 11 auf, kann aber auch beispielsweise als Ringspaltdüse ausgebildet sein, aus der die Luft (9) mit radialer Ausrichtung austritt. Die an einem Ende im Kopfstück 1 eingegossenen Kapillarmembranen 5 sind an ihrem anderen verschlossenen Ende frei beweglich und führen unter der Wirkung der im Rohwasser herrschenden Turbulenzen und/oder der im Rohwasser auftretenden Strömungen mehr oder weniger stark ausgeprägte seitliche Bewegungen aus. Zur Begrenzung der seitlichen Bewegungen ist auf das Kopfstück 1 ein Korb 12 aufgesetzt, der im Ausführungsbeispiel aus Stäben und Ringen ausgebildet ist. Als Korb 12 ist auch ein Rohr einsetzbar, das mit Durchbrüchen versehen sein kann.

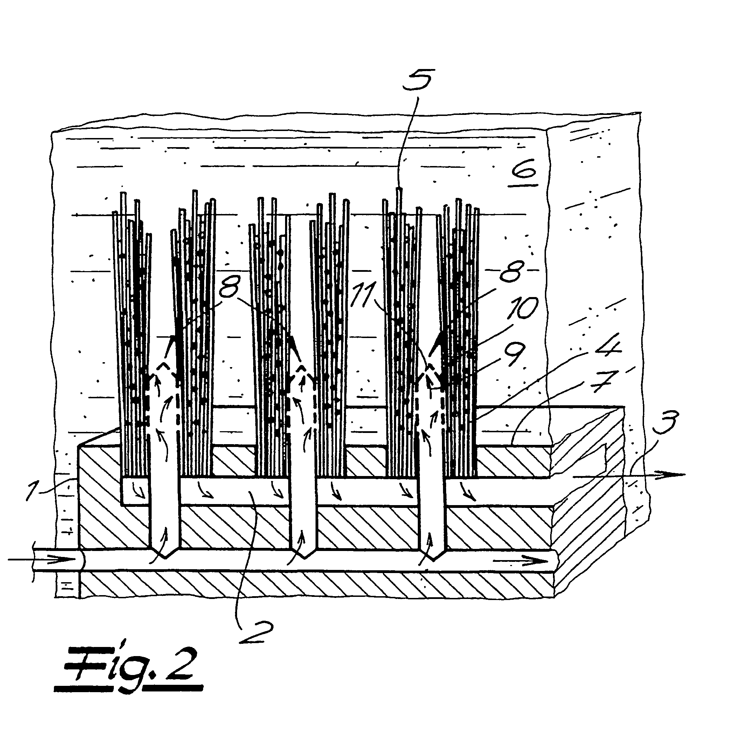

Im Ausführungsbeispiel der Fig. 2 ist angedeutet, dass das Kopfstück 1 als quaderförmiges Element ausgebildet sein kann. In Längsrichtung des Kopfstückes 1 sind eine Mehrzahl von Begasungseinrichtungen 8 angeordnet, um Luft in das Faserbündel 4 einzuleiten. Das Faserbündel 4 besteht aus einer dichten Packung aus Kapillarmembranen 5. Das Kopfstück 1 ist für einen Tauchbetrieb geeignet und kann nicht dargestellte Anschlusseinrichtungen zum Befestigen an einem Gestell aufweisen, das in ein Becken mit Rohwasser abgesenkt werden kann. Der Permeatablauf 3 ist an der schmalen Stirnseite vorgesehen. Insofern wird deutlich, dass eine Mehrzahl der Kopfstücke 1 parallel nebeneinander angeordnet werden können.

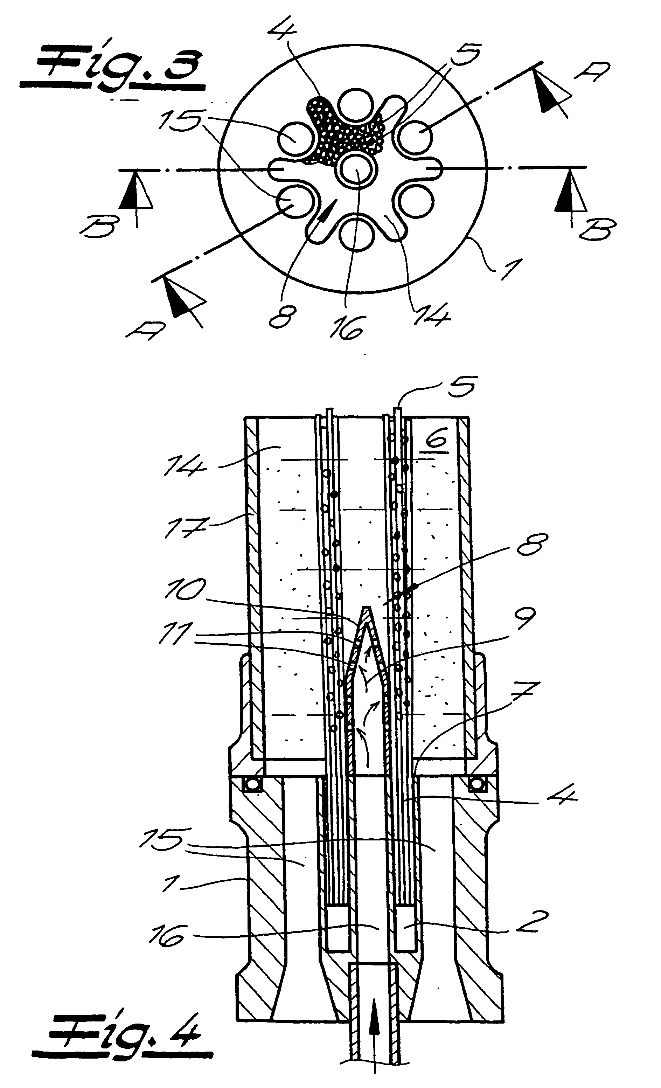

Bei den in den Fig. 3 bis 7 dargestellten Ausführungen weist das Membranfilter einen Filterraum 14 auf, der von dem aufzubereitenden Rohwasser durchströmt wird. Die Anströmung des Filterraumes 14 erfolgt durch Bohrungen 15 im Kopfstück 1, die konzentrisch um die Begasungseinrichtung 8 angeordnet sind. Die Fig. 3 zeigt die Draufsicht auf ein Kopfstück 1, das einen zentrisch angeordneten Kanal 16 für die Zuführung von Luft und konzentrisch den Luftkanal 16 umgebende Bohrungen 15 für das Rohwasser aufweist. Die Anschlussfläche 7 des Kopfstückes 1, in der die das Faserbündel 4 bildenden Kapillarmembranen 5 endseitig eingegossen sind, ist sternförmig ausgebildet, wobei eine Ringfläche zwischen dem Luftkanal 16 und den flüssigkeitsführenden Bohrungen 15 ausgefüllt ist und sich die Anschlussfläche bis in die Bereiche zwischen den Flüssigkeitskanälen 15 erstreckt. Der Fig. 3 entnimmt man auch, dass die Kapillarmembranen 5 in einer sehr dichten Packung angeordnet sind. Das Rohwasser wird im Wesentlichen an der Außenseite des Faserbündels vorbeigeführt und strömt in Längsrichtung der Kapillarmembranen 5 ab. Ferner wird das Faserbündel 4 von innen her mit Luft begast.

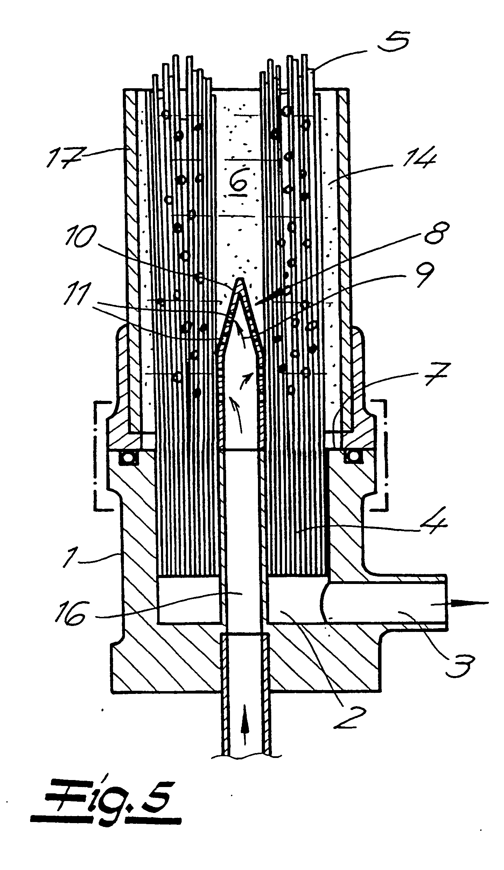

Die Fig. 4 zeigt einen Längsschnitt durch das Membranfilter in der Schnittebene A-A; in Fig. 5 ist der Längsschnitt in der Schnittebene B-B der Fig. 3 dargestellt. Den Darstellungen entnimmt man, dass das Kopfstück 1 mit einem rohrförmigen Mantel lösbar verbunden ist, der den Filterraum bildet. Die Verbindung zwischen Kopfstück 1 und Anschluss des Mantel 17 kann durch übliche nicht dargestellte Schnellspannverschlüsse eingerichtet werden.

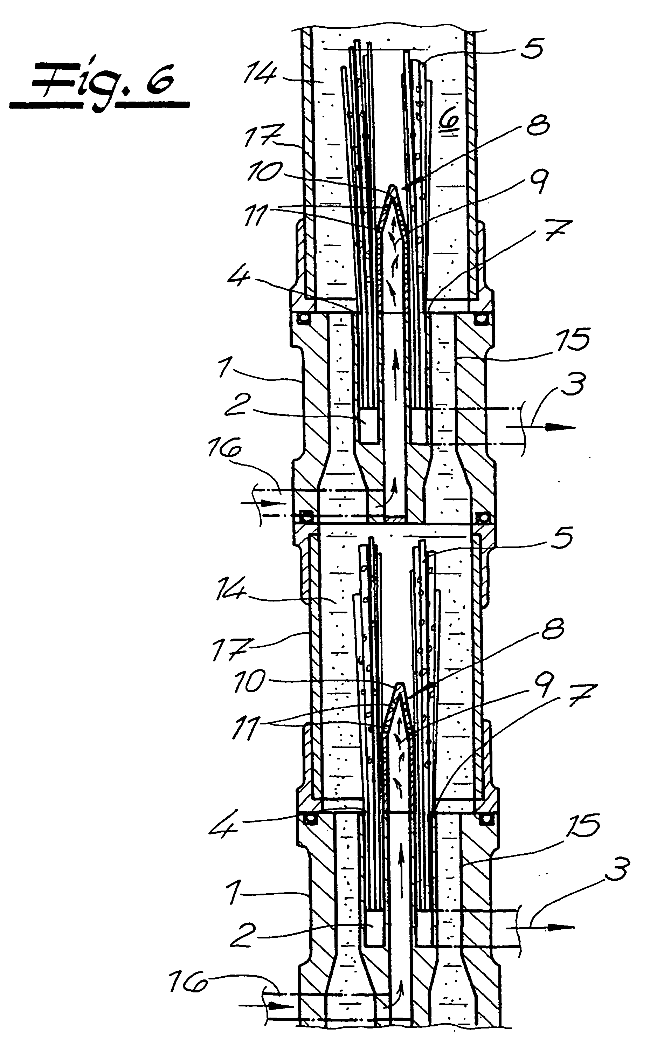

Durch eine geeignete Gestaltung des Kopfstückes 1 können mehrere Membranfilter in Reihe hintereinander angeordnet werden, wie dies in Fig. 6 schematisch dargestellt ist. Das Kopfstück 1 ist an der vom Faserbündel 4 abgewandten Stirnseite mit dem rohrförmigen Mantel 17 eines weiteren identischen Membranfilters verbindbar. Der Permeatablauf 3 ist am Umfang des Kopfstückes 1 angeordnet. Es versteht sich, dass die Permeatabläufe der Membranfilter an eine gemeinsame Sammelleitung angeschlossen werden können.

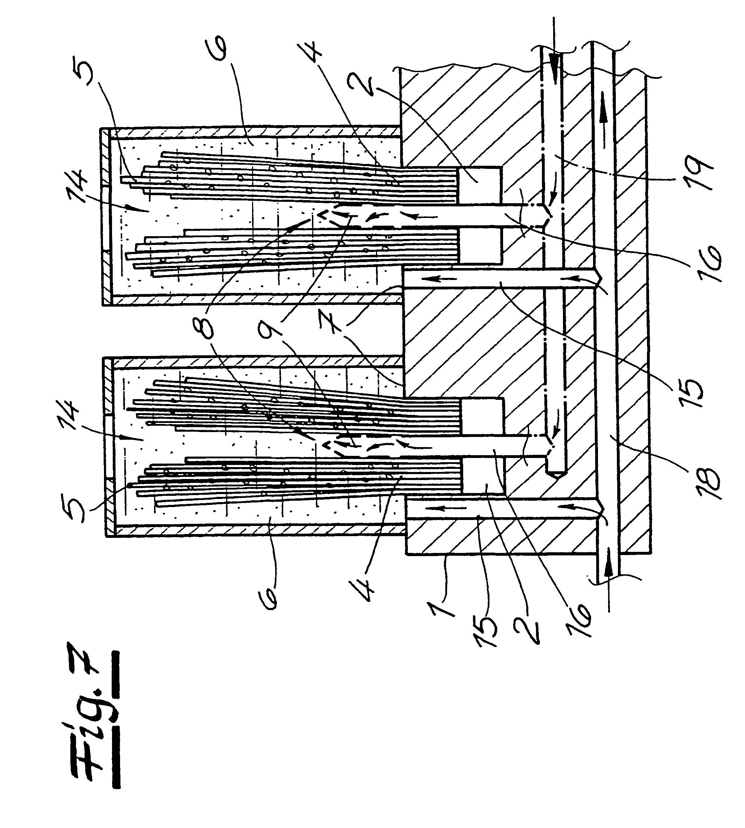

Bei der in Fig. 7 dargestellten Ausführung sind an das Kopfstück 1 mehrere Faserbündel 4 angeschlossen, wobei jedem Faserbündel 4 eine Begasungseinrichtung 8 sowie die Begasungseinrichtung konzentrisch umgebende flüssigkeitsdurchströmte Bohrungen 15 zugeordnet sind. Das Kopfstück 1 weist getrennte Verteilerkammern 18, 19 für Wasser und Luft auf, in welche die Bohrungen 15 für das Rohwasser bzw. Luftkanäle 16 einmünden. An das Kopfstück 1 sind Kammern lösbar angeschlossen, die jeweils einen Filterraum 14 bilden und ein Faserbündel 4 aus Kapillarmembranen 5 enthalten sowie in Längsrichtung der Kapillarmembranen 5 von dem Rohwasser durchströmt sind.

## Patentansprüche

1. Membranfilter für die Wasseraufbereitung mit
einem Kopfstück (1), das einen Permeatsammelraum (2) mit einem Permeatablauf (3) aufweist,
mindestens einem Faserbündel (4) aus Kapillarmembranen, die mit einem offenen Ende zum Permeatsammelraum (2) in das Kopfstück (1) eingegossen und an ihrem anderen Ende geschlossen sind, und
einer Begasungseinrichtung (8) mit einem Mundstück (10), das mindestens eine Austrittsöffnung (11) für Luft aufweist und sich im Wesentlichen parallel zu den Kapillarmembranen (5) erstreckt,
wobei die von dem aufzubereitenden Rohwasser (6) umgebenen Kapillarmembranen (5) des Faserbündels (4) an einer Anschlussfläche (7) des Kopfstückes (1) befestigt sind und geklärte Flüssigkeit in den Kapillarmembranen (5) zum Permeatsammelraum (2) abziehbar ist und wobei das Kopfstück (1) einen Luftkanal (16) enthält, an den das Mundstück (10) der Begasungseinrichtung angeschlossen ist, **dadurch gekennzeichnet, dass** die Kapillarmembranen (5) mit einem unteren, zum Permeatsammelraum (2) offenen Ende in das Kopfstück (1) eingegossen sind, welches in das aufzubereitende Rohwasser absenkbar ist, dass das Mundstück (10) innerhalb des Faserbündels (4) angeordnet und dabei von den in einer dichten Packung am Kopfstück befestigten sowie an ihrem oberen Ende verschlossenen Kapillarmembranen (5) umgeben ist und dass das Faserbündel (4) an seinem oberen Ende ohne Einspannung frei beweglich im Rohwasser endet.

2. Membranfilter nach Anspruch 1, **dadurch gekennzeichnet, dass** auf das Kopfstück (1) ein Korb (12) aufgesetzt ist, der seitliche Bewegungen des Faserbündels (14) begrenzt.

3. Membranfilter nach Anspruch 1 oder 2, **dadurch gekennzeichnet, dass** das Kopfstück (1) Anschlusseinrichtungen zur Befestigung an einem Gestell aufweist, das in ein das Rohwasser enthaltendes Becken absenkbar ist.

4. Membranfilter nach einem der Ansprüche 1 bis 3, **dadurch gekennzeichnet, dass** das Mundstück (10) einen rohrförmigen Abschnitt mit umfangseitigen Bohrungen (11) aufweist.

5. Membranfilter nach einem der Ansprüche 1 bis 3, **dadurch gekennzeichnet, dass** das Mundstück (10) als Ringspaltdüse ausgebildet ist, aus der die Luft radial austritt.

6. Membranfilter nach einem der Ansprüche 1 bis 5, **dadurch gekennzeichnet, dass** das Mundstück (10) ein Rückschlagventil aufweist, das bei einem Druckabfall in der Luftzuführung schließt.

## Claims

1. A membrane filter for water treatment with a head piece (1), which has a permeate chamber (2) with a permeate discharge (3),
at least one bundle of fibres (4) of capillary membranes, which are cast with an end open towards the permeate chamber (2) in the head piece (1) and are closed at their other end, and
a gassing device (8) with a mouth piece (10), which has at least one air outlet (11) for air and extends substantially parallel to the capillary membranes (5),
whereby the capillary membranes (5) of the bundle of fibres (4) enclosed by the waste water (6) to be treated are attached to a terminal face (7) of the head piece (1) and clarified liquid can be taken out in the capillary membranes (5) to the permeate chamber (2), and whereby the head piece (1) contains an air duct (16), to which the mouth piece (10) of the gassing device is attached, **characterised in that** the capillary membranes (5) are cast with a lower end open towards the permeate chamber (2) in the head piece (1), which can be lowered in the waste water to be treated, **in that** the mouth piece (10) is arranged inside the bundle of fibres (4) and is enclosed by the capillary membranes (5) attached to the head piece in tight packing and sealed at its upper end, and **in that** the bundle of fibres (4) terminates freely mobile in the waste water (6)at its other end without tension.

2. The membrane filter as claimed in Claim 1, **characterised in that** a basket (12), which restricts lateral movements of the bundle of fibres (14), is set on the head piece (1).

3. The membrane filter as claimed in Claim 1 or 2, **characterised in that** the head piece (1) has terminals for fastening to a mount, which can be lowered into a basin containing the waste water.

4. The membrane filter as claimed in any one of Claims 1 to 3, **characterised in that** the mouth piece (10) has an annular section with peripheral bores (11).

5. The membrane filter as claimed in any one of Claims 1 to 3, **characterised in that** the mouth piece (10) is designed as a nozzle clearance area, from which the air exits radially.

6. The membrane filter as claimed in any one of Claims 1 to 5, **characterised in that** the mouth piece (10) has a reflux valve, which seals off air supply when pressure drops.

## Revendications

1. Filtre à membrane pour traitement d'eau comprenant
une pièce de sommet (1) qui présente une chambre collectrice de perméat (2) équipée d'une décharge de perméat (3),
au moins un faisceau fibreux (4) composé de membranes capillaires qui sont coulées, par une extrémité ouverte sur la chambre collectrice de perméat (2), dans la pièce de sommet (1) et sont fermées à leur autre extrémité, et
un dispositif de gazage (8) comportant une pièce d'embouchure (10) qui présente au moins un orifice de sortie (11) pour l'air et s'étend sensiblement à la parallèle des membranes capillaires (5),
les membranes capillaires (5) du faisceau fibreux (4) entourées par l'eau brute à traiter (6) étant fixées à une surface de raccordement (7) de la pièce de sommet (1) et du liquide clarifié pouvant être soutiré dans les membranes capillaires (5) vers la chambre collectrice de perméat (2) et la pièce de sommet (1) contenant un canal à air (16) auquel est raccordée la pièce d'embouchure (10) du dispositif de gazage, **caractérisé en ce que** les membranes capillaires (5) sont coulées, par leur extrémité inférieure ouverte sur la chambre collectrice de perméat (2), dans la pièce de sommet (1), laquelle est à descendre dans l'eau brute à traiter, que la pièce d'embouchure (10) est disposée à l'intérieur du faisceau fibreux (4) et est alors entourée par les membranes capillaires (5) fixées en paquetage serré sur la pièce de sommet et refermées à leur extrémité supérieure et que le faisceau fibreux (4), à son extrémité supérieure, aboutit, sans tension et de manière à pouvoir bouger librement, dans l'eau brute.

2. Filtre à membrane selon la revendication 1, **caractérisé en ce que**, sur la pièce de sommet (1), est posée une corbeille (12) qui limite les mouvements latéraux du faisceau fibreux (14).

3. Filtre à membrane selon la revendication 1 ou 2, **caractérisé en ce que** la pièce de sommet (1) présente des dispositifs de raccordement à fixer sur un châssis qui peut être descendu dans un bassin contenant l'eau brute.

4. Filtre à membrane selon l'une quelconque des revendications 1 à 3, **caractérisé en ce que** la pièce d'embouchure (10) présente une section de forme tubulaire comportant des alésages sur sa circonférence (11).

5. Filtre à membrane selon l'une quelconque des revendications 1 à 3, **caractérisé en ce que** la pièce d'embouchure (10) est réalisée sous forme d'une buse à fente annulaire dont l'air sort radialement.

6. Filtre à membrane selon l'une quelconque des revendications 1 à 5, **caractérisé en ce que** la pièce d'embouchure (10) présente une soupape anti-retour qui se ferme en cas de chute de pression dans la conduite d'alimentation en air.
